(19) Europäisches Patentamt
European Patent Office
Office européen des brevets

(11) **EP 2 157 417 B1**

(12) **EUROPÄISCHE PATENTSCHRIFT**

(45) Veröffentlichungstag und Bekanntmachung des Hinweises auf die Patenterteilung:
**15.07.2015 Patentblatt 2015/29**

(51) Int Cl.:
***G01K 17/06*** (2006.01)

(21) Anmeldenummer: **09010657.6**

(22) Anmeldetag: **19.08.2009**

(54) **Verfahren zur Bestimmung der Wärmemengenverteilung in einem Heizsystem für Heizkörper**

Method for determining the heat volume distribution in a heating system for radiators

Procédé de détermination de la répartition de la quantité de chaleur dans un système de chauffage pour radiateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.08.2008 DE 102008038441**

(43) Veröffentlichungstag der Anmeldung:
**24.02.2010 Patentblatt 2010/08**

(73) Patentinhaber: **METRONA WÄRMEMESSER UNION GMBH**
**81379 München (DE)**

(72) Erfinder:
• **Schröder, Franz**
 **D-82054 Sauerlach (DE)**
• **Heckmann, Dieter**
 **D-81475 München (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A2- 0 866 279    EP-A2- 1 770 469**
**DE-A1- 19 903 779**

## Beschreibung

Die Erfindung betrifft ein Verfahren zur Bestimmung der Wärmemengenverteilung in einem Heizsystem mit Heizkörpern.

Heizenergie wird derzeit nur in der Minderzahl von Fällen über eichpflichtige Messeinrichtungen (sogenannte Wärmezähler) quantifiziert. Im überwiegenden Teil des Mietwohnungsbestands in Deutschland (nahezu 20 Mio. Wohnungen) kommen Heizkostenverteiler zum Einsatz, wobei in zunehmendem Maße elektronische Heizkostenverteiler Anwendung finden. Diese im Vergleich zu Wärmezählern technisch weniger aufwendigen Geräte approximieren eine vom Heizkörper abgegebene Wärmemenge über die mit einem einzelnen Sensor ermittelte Temperatur des Heizkörpers oder die mittels zweier Sensoren ermittelte Temperaturdifferenz zwischen Heizkörper und Raumluft. Wie die Bezeichnung der Geräte suggeriert, werden keine absoluten Wärmemengenabgaben quantifiziert, sondern lediglich die relativen Verhältnisse der Wärmemengenabgaben der einzelnen Heizkörper in einem als Abrechnungseinheit zusammengefassten Heizsystem bestimmt, die mit baugleichen Heizkostenverteilern bestückt sind.

EP 1 770 469 A2 zeigt beispielsweise ein System zur Bestimmung von Wärmekenndaten in einem Heizsystem, das einen an einem Heizkörper angebrachten Heizkostenverteiler enthält. Der Heizkostenverteiler ist mittels Kommunikationswege mit einer Recheneinheit verbunden. Der Heizkostenverteiler kann sowohl eine Heizkörpertemperatur als auch eine Raumtemperatur messen. Diese Größen werden dann zu einer Recheneinheit weitergeleitet.

Der Einfachheit und der Kostenbegrenzung wegen, insbesondere in Bezug auf eine unkomplizierte Messtechnik, gelten bei dem oben beschriebenen Verfahren zur Bestimmung von relativen Wärmemengen folgende Vereinfachungen, die in der DIN/EN-Norm 834 für elektronische Heizkostenverteiler genehmigt sind:

1) Die thermische Ankopplung des elektronischen Heizkostenverteilers an den Heizkörper wird durch zeitlich und (am Heizkörper) räumlich konstante Werte, die sogenannten c-Werte, dargestellt.
2) Für die Bestimmung der Wärmemengenabgabe des Heizkörpers wird ein für alle Betriebszustände des Heizkörpers ein fixer Referenzpunkt auf dessen Oberfläche gewählt, dessen Temperatur dann stellvertretend für die Temperatur des gesamten Heizkörpers herangezogen wird.

Der Referenzpunkt für die Messung der Heizkörpertemperatur, der den Ort der Anbringung des elektronischen Heizkostenverteilers festlegt, liegt per Konvention horizontal in der Heizkörpermitte und vertikal zwischen 50 % und 75 % der Bauhöhe des Heizkörpers. Der Referenzpunkt erfüllt seinen Zweck am besten im ausgelasteten Betriebszustand des Heizkörpers, d. h.

bei hohem oder maximalem Volumenstrom (in den Heizkörper einströmendes Heizmediumvolumen pro Zeiteinheit), dem sogenannten Basiszustand. Im Teillastbetrieb hingegen, d. h. bei kleinen oder kleinsten Volumenströmen, erwärmt sich der Heizkörper am Referenzpunkt weniger, als für eine realistische Bestimmung der tatsächlich abgegebenen Wärmemenge des Heizkörpers notwendig wäre. In der Praxis zeigt sich nämlich, dass sich die meisten Heizkörper im Teillastbetrieb vertikal nur im oberen Bereich und horizontal nur auf der Einlaufseite signifikant erwärmen.

Die Folge hiervon kann eine erhebliche Unterschätzung der tatsächlich abgegebenen Wärmemenge sein, wenn die Teillast hinreichend klein ist, d. h. der Heizkörper insgesamt nur eine geringe absolute Wärmemenge abgibt. Da der Teillastbetrieb eines Heizkörpers weitgehend die Regel und nicht die Ausnahme ist, insbesondere wegen der in Mitteleuropa traditionell stark überdimensionierten Heizsysteme, ist eine Kompensation des zu niedrigen Erfassungsgrads wünschenswert, um eine genauere Bestimmung der Wärmemengenabgabe zu ermöglichen.

Dem Problem könnte abgeholfen werden, indem mit abnehmendem Volumenstrom der Referenzpunkt auf dem Heizkörper kontinuierlich nach oben verschoben wird. Dies ist aber physikalisch aufgrund der festen Anbringung des elektronischen Heizkostenverteilers mit dem heizkörperseitigen Temperaturfühler nicht möglich.

Angesichts einer möglichen zukünftigen Abkehr von traditionellen Heizsystemen mit zentraler Umwälzpumpe verfolgt die Erfindung einen anderen Ansatz, der später genauer erläutert wird.

Es ist aufgrund zukunftsweisender Testergebnisse zu erwarten, dass in immer mehr Heizsystemen anstelle einer zentralen Umwälzpumpe kleine lokale Versorgungspumpen eingesetzt werden, die den Heizmediumzufluss dezentral für jeden Heizkörper individuell regeln und somit die gängigen Thermostatventile ersetzen können. In einem solchen Heizsystem mit lokalen Versorgungspumpen werden die Wärmeübergabe innerhalb des Heizungssystems und die Wärmeabgabe der Heizkörper hydraulisch optimiert, indem die Betriebsparameter der lokalen Versorgungspumpen über eine Vernetzung (Kabel oder Funk) ständig zentral erfasst und gesteuert werden. Neben diesem nicht unerheblichen Energieeinsparpotenzial durch den Wegfall der Drosselregelung bieten Heizsysteme mit lokalen Versorgungspumpen weitere Vorteile, die für die Erfindung jedoch unerheblich sind.

Aus der EP 0 866 279 A2 ist beispielsweise eine Vorrichtungsanordnung in einem Heizsystem mit einem Heizkörper, einer dem Heizkörper zugeordneten lokalen Versorgungspumpe und einer Zentraleinheit, in der von der lokalen Versorgungspumpe stammende Daten empfangen werden, bekannt.

Aufgabe der Erfindung ist es, in einem Heizsystem mit Heizkörpern, die mit lokalen Versorgungspumpen ausgestattet sind, eine genauere Bestimmung der Wärmemengenverteilung zu ermöglichen.

Zur Lösung dieser Aufgabe schlägt die Erfindung ein Verfahren mit den Merkmalen des Anspruchs 1 vor. Vorteilhafte und zweckmäßige Ausgestaltungen und Weiterbildungen des erfindungsgemäßen Verfahrens ergeben sich aus den Unteransprüchen.

Das erfindungsgemäße Verfahren zur Bestimmung der Wärmemengenverteilung in einem Heizsystem mit Heizkörpern, an denen jeweils ein elektronischer Heizkostenverteiler und eine lokale Versorgungspumpe zur Versorgung des Heizkörpers angebracht sind, umfasst folgenden Schritt:

- Bestimmen einer repräsentativen Heizkörpertemperatur, die der Berechnung von Anzeige- oder Verbrauchswerten des elektronischen Heizkostenverteilers zugrunde gelegt wird,

und ist **dadurch gekennzeichnet, dass** für die Bestimmung der repräsentativen Heizkörpertemperatur ein Messwert eines heizkörperseitigen Temperaturfühlers im elektronischen Heizkostenverteiler und der Wert einer betriebsabhängigen Größe der lokalen Versorgungspumpe als Eingangsgrößen verwendet werden.

Die Erfindung beruht auf der Erkenntnis, dass im Betrieb eines Heizsystems mit lokalen Versorgungspumpen (im Folgenden der Einfachheit halber kurz als LVP-System bezeichnet) zusätzliche Informationen über die Volumenströme (betriebsabhängige Größe der lokalen Versorgungspumpen), die durch die einzelnen Heizkörper fließen, zugänglich gemacht werden können. Diese Informationen können im Zusammenhang mit den gemessenen Heizkörpertemperaturen für die Bestimmung der Wärmemengenabgaben der Heizkörper genutzt werden. Von Vorteil ist insbesondere, dass die Volumenstrominformationen aufgrund der Art des Betriebs eines LVP-Systems ständig und in kurzen zeitlichen Abständen aktualisiert werden.

Mithilfe der Volumenstrominformation eines Heizkörpers kann zunächst erkannt werden, ob der Heizkörper im Teillastbetrieb läuft. Durch Kombination der Volumenstrominformation mit dem Temperaturstatus des Heizkörpers - gegeben durch die Temperaturmessung des elektronischen Heizkostenverteilers am Referenzpunkt - kann in einem solchen Fall eine volumenstromabhängige repräsentative Heizkörpertemperatur bestimmt werden, indem die an konstanter Höhe gemessene Referenztemperatur in geeigneter Weise korrigiert wird. Die Anzeige- bzw. Verbrauchswerte des elektronischen Heizkostenverteilers (Zählfortschritt) können dann auf der Grundlage der korrigierten Temperatur realitätsnäher berechnet werden, als dies ohne die Korrektur möglich wäre.

Die Erfindung schafft somit ausdrücklich kein neuartiges Verfahren zur Wärmemengenzählung, das eichpflichtig wäre, sondern verbessert das herkömmliche Heizkostenverteilungsprinzip unter Ausnutzung von in LVP-Systemen verfügbaren Zusatzinformationen, insbesondere hinsichtlich der Genauigkeit und der Auswertemöglichkeiten, was sich in der Bezeichnung "Verfahren zur Bestimmung der Wärmemengenverteilung" widerspiegelt.

Gegenstand der Erfindung ist auch eine Vorrichtungsanordnung in einem Heizsystem, die zur Durchführung des erfindungsgemäßen Verfahrens eingerichtet ist. Die Vorrichtungsanordnung umfasst einen Heizkörper, einen am Heizkörper angebrachten elektronischen Heizkostenverteiler, eine dem Heizkörper zugeordnete lokale Versorgungspumpe und eine Zentraleinheit, in der vom elektronischen Heizkostenverteiler und von der lokalen Versorgungspumpe stammende Daten empfangen werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:

- Figur 1 schematisch eine Vorrichtungsanordnung zur Durchführung des erfindungsgemäßen Verfahrens; und

- Figur 2 ein Diagramm mit beispielhaften Temperaturverläufen entlang der Vertikalen eines Heizkörpers für verschiedene Volumenströme.

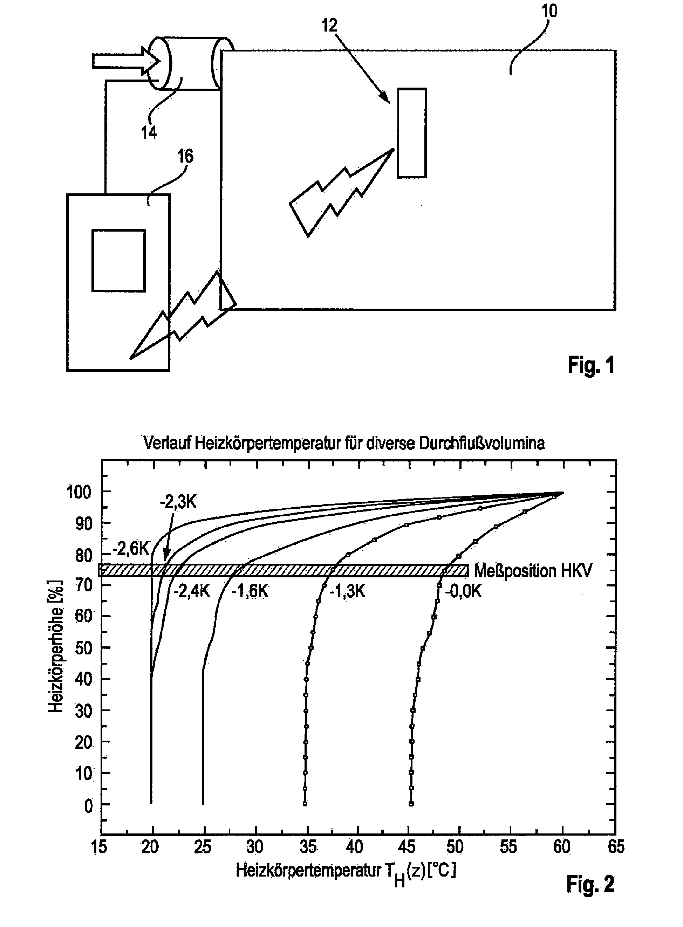

In Figur 1 ist eine Vorrichtungsanordnung mit einem Heizkörper 10 dargestellt, auf dem ein nach dem Zweifühler-Messverfahren arbeitender elektronischer Heizkostenverteiler 12 angebracht ist. Der Heizkörper 10 und der elektronische Heizkostenverteiler 12 sollen Teil eines Heizsystems sein, das eine Abrechnungseinheit bildet. Das Heizsystem umfasst mehrere Heizkörper 10 mit baugleichen elektronischen Heizkostenverteilern 12.

Das Heizsystem ist ein sogenanntes LVP-System, bei dem alle Heizkörper 10 mit lokalen Versorgungspumpen 14 ausgestattet sind. Jede lokale Versorgungspumpe 14 versorgt nur den zugehörigen Heizkörper 10 mit Heizmedium nach dem jeweiligen Bedarf. Die lokalen Versorgungspumpen 14 des Heizsystems stehen über Kabel und/oder Funk in Verbindung mit einer Zentraleinheit 16. Die Zentraleinheit 16 empfängt von jeder lokalen Versorgungspumpe 14 betriebsabhängige Daten und sendet Signale zur Steuerung der lokalen Versorgungspumpe 14. Auf welchem Wege die Daten zur Zentraleinheit 16 gelangen (direkt oder indirekt), ist für die Erfindung unerheblich.

Im dargestellten Ausführungsbeispiel ist auch der elektronische Heizkostenverteiler 12 mit einer Sendeeinrichtung ausgestattet, die auf die bereits vorhandene oder eine zusätzliche Empfangseinrichtung der Zentraleinheit 16 abgestimmt ist. Somit ist es möglich, auch Daten vom elektronischen Heizkostenverteiler 12, insbesondere den aktuellen Messwert der Heizkörpertemperatur, zur Zentraleinheit 16 zu übertragen, um diese dort, oder - nach einer weiteren Übertragung - in einer anderen elektronischen Einheit, auszuwerten. Gleiches gilt für die Daten der anderen elektronischen Heizkostenverteiler 12 des Heizsystems, sodass die Zentraleinheit 16 als Daten sammelnde Zentraleinheit bezeichnet werden kann. Die Daten sammelnde Zentraleinheit 16 muss aber nicht eine konkret zum LVP-System zugehörige Zentraleinheit sein. Wichtig ist nur, dass in der Zentraleinheit 16 zeitsynchrone Daten der lokalen Versorgungspumpen 14 und der elektronischen Heizkostenverteiler 12 zusammenlaufen und für eine Auswertung zur Verfügung stehen.

Erstes Ziel des erfindungsgemäßen Verfahrens ist es, in jedem Betriebszustand eines Heizkörpers 10 eine für den ganzen Heizkörper 10 bestmögliche repräsentative Heizkörpertemperatur zu bestimmen. Ausgewertet wird hierfür eine Kombination aus dem Messwert des Temperaturfühlers des elektronischen Heizkostenverteilers 12 und einer betriebsabhängigen Größe der lokalen Versorgungspumpe 14, die einen Rückschluss auf den relativen oder absoluten Volumenstrom (dV/dt oder V) zulässt. Eine geeignete Größe hierfür ist insbesondere die Stromaufnahme der lokalen Versorgungspumpe 14 bzw. deren zeitliche Änderung.

Die Information über den Volumenstrom dient zur Erkennung eines Teillastbetriebs des Heizkörpers 10 und der Einstufung des Teillastbetriebs relativ zum Basiszustand des Heizkörpers 10. Die Kenntnis über den Teillastbetrieb ist die Grundlage für eine Korrektur der messtechnisch bestimmten Referenztemperatur des Heizkörpers 10. Die mathematisch durch eine von der Heizkörpertemperatur, Raumlufttemperatur und dem Volumenstrom abhängige Funktion (die später noch erläutert wird) darstellbare Korrektur kann in der Praxis vereinfacht mittels einer in einem elektronischen Speicher hinterlegten mehrdimensionalen Zuweisungstabelle erfolgen, indem jedem Wertetripel aus Heizkörpertemperatur, Raumlufttemperatur und Volumenstrom ein vorher berechneter Korrekturwert für die Heizkörpertemperatur zugewiesen wird. Ausgangsgröße ist schließlich die korrigierte Referenztemperatur, die im Folgenden als repräsentative Heizkörpertemperatur bezeichnet wird.

Die repräsentative Heizkörpertemperatur wird dann anstelle der Referenztemperatur für die Berechnung der Anzeige-/Verbrauchswerte des elektronischen Heizkostenverteilers 12 eingesetzt. Hierzu kann die repräsentative Heizkörpertemperatur entweder über Funk zurück an den elektronischen Heizkostenverteiler 12 übermittelt werden, sofern dieser mit einer Empfangseinrichtung ausgestattet ist, oder die Berechnung erfolgt außerhalb des elektronischen Heizkostenverteilers 12, z. B. direkt in der Zentraleinheit 16 mittels geeigneter Software.

Das oben beschriebene Prinzip ermöglicht in gewissen Grenzen auch eine Korrektur des "dynamischen" Zählverhaltens, also der Abweichungen in der Anzeigegeschwindigkeit, die sich durch die thermische Trägheit des raumseitigen Temperaturfühlers des elektronischen Heizkostenverteilers 12 gegenüber dem heizkörperseitigen Temperaturfühler notwendig ergibt. Dies ist insofern bedeutsam, als dynamische Temperaturänderungen durch die normkonforme Annahme zeitlich konstanter c-Werte derzeit nicht abgedeckt sind.

Nachfolgend wird die Korrektur der Referenztemperatur des Heizkörpers 10 physikalisch und mathematisch beschrieben. Das Verfahren zur Bestimmung der Wärmemengenverteilung geht im empirischen Ansatz davon aus, dass für eine konstante Vorlauftemperatur $T_V$ sich die vertikale Temperaturverteilung im Heizkörper $T_H$ durch eine Funktion des Volumenstroms V darstellen lässt:

$$T_H = f(z, d\dot{V}/dt)$$

mit z: vertikale Koordinate auf dem Heizkörper (Höhe).

Für einen gegebenen konstanten Volumenstrom gilt folglich, dass $T_H$ nur noch eine Funktion von z ist. Dadurch ergeben sich die im Diagramm der Figur 2 illustrierten Kurven für unterschiedliche, aber konstante Volumenströme (die Volumenströme werden von rechts nach links kleiner), die unterschiedliche Teillastbetriebe des Heizkörpers 10 darstellen. Den Kurven liegt jeweils eine konstante Vorlauftemperatur von 60 °C zugrunde.

Vereinfachend wird zusätzlich als Randbedingung festgelegt, dass die vertikale Temperaturverteilung über die horizontale Erstreckung des Heizkörpers 10 in erster Näherung konstant ist.

Mit gegebenem Volumenstrom und der gemäß der nach dem traditionellen Heizkostenverteilungsverfahren ermittelten Heizkörperreferenztemperatur $T_{Href} \equiv T_H(z = 0{,}75 \cdot h_{max})$, mit $h_{max}$ = Höhe des Heizkörpers, lässt sich ein eindeutiger Vertikalverlauf der Heizkörpertemperatur bestimmen. Der Ausdruck

$$\left( \int_0^h f(z)\,dz \right) / h$$

liefert im Rahmen dieses Modells diejenige repräsentative Heizkörpertemperatur $T_H^*$, die die Realität am besten widerspiegelt.

Bei der Folgeberechnung der Anzeige-/Verbrauchswerte (Zählfortschritt) wird $T_{Href}$ durch $T_H^*$ ersetzt, wodurch der verminderte Erfassungsgrad im Teillastbetrieb des Heizkörpers 10 kompensiert wird.

Wie in Figur 2 zu erkennen ist, kann bei einer Vorlauftemperatur von 60 °C die Differenz zwischen $T_{Href}$ und $T_H^*$ bis zu annähernd 3 Kelvin betragen. Dies ist insofern von Bedeutung, weil schon eine um wenige Kelvin unterschätzte repräsentative Heizkörpertemperatur das Anlaufen des Zählbetriebs des elektronischen Heizkostenverteilers 12 unterdrücken kann. Im Beispiel gemäß Figur 2 würde dies bei den linken drei Kurven im Bereich ganz geringer Teillasten zutreffen. Solche Betriebszustände im untersten Teillastbereich werden also nach traditionellem Heizkostenverteilungsverfahren gar nicht erkannt, was zu einer Nichterfassung erheblicher Wärmemengenabgaben bei länger andauerndem Betrieb führen kann.

Mithilfe des erfindungsgemäßen Verfahrens kann aber in solchen Fällen immer eine individuelle repräsentative Heizkörpertemperatur bestimmt werden, die die Wärmemengenabgabe vom Heizkörper 12 an die Umgebung besser (oder wenigstens genauso gut) beschreibt, als es nach dem traditionellen Heizkostenverteilungsverfahren möglich ist.

Gemäß einer Weiterbildung des erfindungsgemäßen Verfahrens, in der die Kenntnis der absoluten umgesetzten Energiemenge des gesamten Heizsystems vorausgesetzt wird, kann aus dieser Energiemenge und der erfindungsgemäß bestimmten relativen abgegebenen Wärmemenge des Heizkörpers 10 die absolute abgegebene Wärmemenge des Heizkörpers 10 im Heizsystem bestimmt werden.

## Patentansprüche

1. Verfahren zur Bestimmung der Wärmemengenverteilung in einem Heizsystem mit Heizkörpern (10), an denen jeweils ein elektronischer Heizkostenverteiler (12) angebracht ist, wobei das Verfahren folgenden Schritt umfasst:

   - Bestimmen einer repräsentativen Heizkörpertemperatur, die der Berechnung von Anzeigeoder Verbrauchswerten des elektronischen Heizkostenverteilers (12) zugrunde gelegt wird,

   **dadurch gekennzeichnet, dass** für die Bestimmung der repräsentativen Heizkörpertemperatur ein Messwert eines heizkörperseitigen Temperaturfühlers im elektronischen Heizkostenverteiler (12) und der Wert einer betriebsabhängigen Größe einer am Heizkörper (10) angebrachten lokalen Versorgungspumpe (14) zur Versorgung des Heizkörpers (10) als Eingangsgrößen verwendet werden.

2. Verfahren nach Anspruch 1, **dadurch gekennzeichnet, dass** die zeitliche Änderung der betriebsabhängigen Größe berücksichtigt wird.

3. Verfahren nach Anspruch 1 oder 2, **dadurch gekennzeichnet, dass** die betriebsabhängige Größe der lokalen Versorgungspumpe (14) der von der lokalen Versorgungspumpe (14) geförderte Volumenstrom ist.

4. Verfahren nach Anspruch 1 oder 2, **dadurch gekennzeichnet, dass** die betriebsabhängige Größe der lokalen Versorgungspumpe (14) deren Stromverbrauch ist.

5. Verfahren nach einem der vorhergehenden Ansprüche, **dadurch gekennzeichnet, dass** für die Bestimmung der repräsentativen Heizkörpertemperatur als weitere Eingangsgröße ein Messwert eines raumseitigen Temperaturfühlers im elektronischen Heizkostenverteiler (12) verwendet wird.

6. Verfahren nach einem der vorhergehenden Ansprüche, **dadurch gekennzeichnet, dass** die Bestimmung der repräsentativen Heizkörpertemperatur mit Hilfe einer in einem elektronischen Speicher hinterlegten Zuweisungstabelle erfolgt.

7. Verfahren nach einem der vorhergehenden Ansprüche, **dadurch gekennzeichnet, dass** eine relative abgegebene Wärmemenge eines Heizkörpers (10) des Heizsystems unter Verwendung der repräsentativen Heizkörpertemperatur bestimmt wird.

8. Verfahren nach Anspruch 7, **dadurch gekennzeichnet, dass** die absolute abgegebene Wärmemenge eines Heizkörpers (10) des Heizsystems aus der relativen abgegebenen Wärmemenge des Heizkörpers (10) und der absoluten umgesetzten Energiemenge des gesamten Heizsystems bestimmt wird.

9. Verfahren nach einem der vorhergehenden Ansprüche, **dadurch gekennzeichnet, dass** die repräsentative Heizkörpertemperatur oder eine von dieser abhängige Größe vom elektronischen Heizkostenverteiler (12) an eine Daten sammelnde Zentraleinheit (16) übermittelt wird.

10. Vorrichtungsanordnung in einem Heizsystem, mit einem Heizkörper (10), einer dem Heizkörper (10) zugeordneten lokalen Versorgungspumpe (14) und einer Zentraleinheit (16), in der von der lokalen Versorgungspumpe (14) stammende Daten empfangen werden, **dadurch gekennzeichnet, dass** die Vorrichtungsanordnung einen am Heizkörper (10) angebrachten elektronischen Heizkostenverteiler (12) umfasst, dass in der Zentraleinheit (16) vom elektronischen Heizkostenverteiler (12) stammende Daten empfangen werden und dass die Vorrichtungsanordnung zur Durchführung des Verfahrens nach einem der vorhergehenden Ansprüche eingerichtet ist.

## Claims

1. A method of determining the heat quantity distribution in a heating system having radiators (10) to each of which an electronic heat cost allocator (12) is mounted, the method comprising the following step:

   - determining a representative radiator temperature which is taken as a basis for the calculation of display values or consumption values of the electronic heat cost allocator (12),

**characterized in that** for determining the representative radiator temperature, a measured value of a radiator-side temperature sensor in the electronic heat cost allocator (12) and the value of an operation-dependent quantity of a local supply pump (14) mounted to the radiator (10) for supplying the radiator (10) are made use of as input quantities.

2. The method according to claim 1, **characterized in that** the change in the operation-dependent quantity over time is taken into consideration.

3. The method according to claim 1 or 2, **characterized in that** the operation-dependent quantity of the local supply pump (14) is the volume flow delivered by the local supply pump (14).

4. The method according to claim 1 or 2, **characterized in that** the operation-dependent quantity of the local supply pump (14) is the current consumption thereof.

5. The method according to any of the preceding claims, **characterized in that** for determining the representative radiator temperature, a measured value of a room-side temperature sensor in the electronic heat cost allocator (12) is made use of as a further input quantity.

6. The method according to any of the preceding claims, **characterized in that** the determination of the representative radiator temperature is effected with the aid of an allocation table stored in an electronic memory.

7. The method according to any of the preceding claims, **characterized in that** a relative quantity of heat emitted by a radiator (10) of the heating system is determined using the representative radiator temperature.

8. The method according to claim 7, **characterized in that** the absolute quantity of heat emitted by a radiator (10) of the heating system is determined from the relative quantity of heat emitted by the radiator (10) and the absolute amount of energy converted by the entire heating system.

9. The method according to any of the preceding claims, **characterized in that** the representative radiator temperature or a quantity dependent thereon is transmitted from the electronic heat cost allocator (12) to a data collecting central unit (16).

10. A device arrangement in a heating system, comprising a radiator (10), a local supply pump (14) associated with the radiator (10), and a central unit (16) in which data that originates from the local supply pump (14) is received, **characterized in that** the device arrangement comprises an electronic heat cost allocator (12) mounted to the radiator (10), **in that** data that originates from the electronic heat cost allocator (12) is received in the central unit (16), and **in that** the device arrangement is configured to carry out the method according to any of the preceding claims.

**Revendications**

1. Procédé de détermination de la répartition des quantités de chaleur dans un système de chauffage présentant des radiateurs de chauffage (10) sur lesquels est agencé un répartiteur de frais de chauffage électronique (12) respectif, le procédé comportant l'étape suivante:

- détermination d'une température représentative de radiateur de chauffage sur laquelle se fonde le calcul de valeurs d'affichage ou de consommation du répartiteur de frais de chauffage électronique (12),

**caractérisé en ce que** pour la détermination de la température représentative de radiateur de chauffage, une mesure d'un capteur de température côté radiateur de chauffage dans le répartiteur de frais de chauffage électronique (12) et la valeur d'une grandeur qui dépend du fonctionnement, d'une pompe d'alimentation locale (14) agencée sur le radiateur de chauffage (10) pour l'alimentation du radiateur de chauffage (10) sont utilisées en tant que grandeurs d'entrée.

2. Procédé selon la revendication 1, **caractérisé en ce que** le changement dans le temps de la grandeur qui dépend du fonctionnement est pris en compte.

3. Procédé selon la revendication 1 ou 2, **caractérisé en ce que** la grandeur qui dépend du fonctionnement, de la pompe d'alimentation locale (14) est le débit volumétrique refoulé par la pompe d'alimentation locale (14).

4. Procédé selon la revendication 1 ou 2, **caractérisé en ce que** la grandeur qui dépend du fonctionnement, de la pompe d'alimentation locale (14) est sa consommation de courant.

5. Procédé selon l'une des revendications précédentes, **caractérisé en ce que** pour la détermination de la température représentative de radiateur de chauffage, une mesure d'un capteur de température côté espace dans le répartiteur de frais de chauffage électronique (12) est utilisée en tant que grandeur d'entrée additionnelle.

6. Procédé selon l'une des revendications précédentes, **caractérisé en ce que** la détermination de la température représentative de radiateur de chauffage est effectuée au moyen d'un tableau d'affectation enregistré dans une mémoire électronique.

7. Procédé selon l'une des revendications précédentes, **caractérisé en ce qu'**une quantité de chaleur fournie relative d'un radiateur de chauffage (10) du système de chauffage est déterminée en utilisant la température représentative de radiateur de chauffage.

8. Procédé selon la revendication 7, **caractérisé en ce que** la quantité de chaleur fournie absolue d'un radiateur de chauffage (10) du système de chauffage est déterminée à partir de la quantité de chaleur fournie relative du radiateur de chauffage (10) et de la quantité d'énergie transformée absolue du système de chauffage entier.

9. Procédé selon l'une des revendications précédentes, **caractérisé en ce que** la température représentative de radiateur de chauffage ou une grandeur qui dépend de celle-ci est transmise par le répartiteur de frais de chauffage électronique (12) à une unité centrale (16) qui collecte des données.

10. Arrangement de dispositif dans un système de chauffage, comportant un radiateur de chauffage (10), une pompe d'alimentation locale (14) associée au radiateur de chauffage (10), et une unité centrale (16) dans laquelle sont reçues des données provenant de la pompe d'alimentation locale (14), **caractérisé en ce que** l'arrangement de dispositif comprend un répartiteur de frais de chauffage électronique (12) agencé sur le radiateur de chauffage (10), **en ce que** des données provenant du répartiteur de frais de chauffage électronique (12) sont reçues dans l'unité centrale (16), et **en ce que** l'arrangement de dispositif est adapté à la réalisation du procédé selon l'une des revendications précédentes.

Fig. 1

Verlauf Heizkörpertemperatur für diverse Durchflußvolumina

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1770469 A2
- EP 0866279 A2